Europäisches Patentamt

European Patent Office

Office européen des brevets

(11) Veröffentlichungsnummer: **0 124 105**
**B1**

# (12) EUROPÄISCHE PATENTSCHRIFT

(45) Veröffentlichungstag der Patentschrift: **01.08.90**

(51) Int. Cl.⁵: **H 04 M 17/02**

(21) Anmeldenummer: **84104761.6**

(22) Anmeldetag: **27.04.84**

(54) **Ortsfest angeordnete Fernsprechstation mit an einer Grundplatte lösbar befestigter Aufnahme für die Bedienungseinrichtungen.**

(30) Priorität: **02.05.83 DE 3315931**
**30.05.83 DE 3319556**

(43) Veröffentlichungstag der Anmeldung:
**07.11.84 Patentblatt 84/45**

(45) Bekanntmachung des Hinweises auf die Patenterteilung:
**01.08.90 Patentblatt 90/31**

(84) Benannte Vertragsstaaten:
**AT CH DE FR GB LI**

(56) Entgegenhaltungen:
**US-A-3 317 674**
**US-A-3 398 244**
**US-A-3 868 483**

(73) Patentinhaber: **Siemens Aktiengesellschaft**
**Wittelsbacherplatz 2**
**D-8000 München 2 (DE)**

(72) Erfinder: **Schwandt, Werner**
**Schmutzerstrasse 6**
**D-8911 Vilgertshofen (DE)**
Erfinder: **Ludwig, Max, Dipl.-Ing.**
**Am Kornacker 18b**
**D-8000 München 70 (DE)**

Courier Press, Leamington Spa, England.

**Beschreibung**

Die vorliegende Erfindung beinhaltet eine ortsfest angeordnete Fernsprechstation mit einer an einer Grundplatte über ein Gelenk lösbar befestigten Aufnahme für die Bedienungseinrichtungen, wobei die beiden Teile im Betriebszustand der Fernsprechstation mittels einer Verriegelung verbunden und durch ein Schloß gesichert sind.

Derartige Münzfernsprecher sind z.B. durch die US-A-3,317,674 bekannt, wobei bei diesem Münzfernsprecher auf einer Grundplatte eine über ein Gelenk mit dieser Grundplatte verbundene und im wesentlichen kastenförmig gestaltete Aufnahme aufsetzbar ist, die alle wesentlichen Bedienungseinrichtungen des Münzfernsprechers aufnimmt und im Betriebszustand des Fernsprechers mittels eines Schlosses gegen ein gewaltsames Aufbrechen durch unbefugte Personen gesichert ist. Ein derartiges Aufbrechen hat zur Folge, daß die Station für den nachfolgenden Benutzer unbrauchbar gemacht ist, wobei zur Wiederherstellung des Münzfernsprechers nicht unerhebliche Kosten aufgewendet werden müssen.

Der vorliegenden Erfindung liegt daher die Aufgabe zugrunde, eine ortsfest angeordnete Fernsprechstation konstruktiv so zu gestalten, daß eine hohe Sicherheit gegen ein gewaltsames Aufbrechen erreicht wird.

Gemäß der Erfindung wird diese Aufgabe dadurch gelöst, daß zumindest eines der beiden die Fernsprechstation bildenden Teile topfförmig gestaltet ist und die Verbindung der beiden Teile über ein Drehgelenk erfolgt, das einen bogenförmigen Arm kreisförmigen Querschnittes besitzt, der an seinen freien Enden mit winkelförmigen Stegen verbunden ist, deren freie Enden wiederum Zapfen aufweisen, die in Bohrungen von an der Grundplatte befestigten Winkeln eingreifen, wobei an dem Arm ein U-förmiger Haltebügel schwenkbar und in axialer Richtung des Arms verschiebbar gelagert ist, der mit der topfförmigen Aufnahme fest verbunden ist.

Bei dieser Gestaltung der die Fernsprechstation bildenden Teile lassen sich diese so zusammenfügen, daß sie keinen Ansatz für ein dem Aufbruch dienendes Werkzeug bilden. Hierbei kann entweder die Aufnahme oder die Grundplatte topfförmig gestaltet werden. Es hat sich jedoch aus Gründen einer einfacheren Wartung als zweckmäßig erwiesen, die Aufnahme für die Bedienungseinrichtungen, wie z.B. Handapparat, Wähleinrichtung usw. topfförmig zu gestalten, so daß bei z.B. scheibenförmiger Ausbildung der an einer Wand befestigten Grundplatte diese von der Aufnahme im Betriebszustand übergriffen wird und somit direkt an der Wand zur Anlage gelangt. Bei topfförmiger Ausgestaltung eines der beiden die Station bildenden Teile besteht nämlich das Problem, ein Verbindungselement zu schaffen, mit dem bei ständiger Führung und Halterung eines der beiden Teile einmal eine Verriegelung bzw. Entriegelung der beiden Teile in radialer Richtung und zum anderen ein Abheben bzw. ein Verschwenken des gelösten Teils zum befestigten Teil in axialer Richtung erreicht werden kann. Eine derartige Verbindung der beiden Teile kann über ein Drehgelenk erfolgen, daß eine Drehbewegung in die bzw. aus der Verriegelungsstellung sowie ein Verschwenken eines der Teile gestattet. Ein derartiges Drehgelenk kann beispielsweise in der genannten Weise ausgebildet sein. Durch Verschieben des Haltebügels auf dem bogenförmigen Arm kann somit in einfacher Weise die Verriegelung bzw. Entriegelung der beiden Teile bewirkt werden. Dabei kann der Haltebügel in seinem Basisbereich bogenförmig gestaltet sein und im Endbereich seiner beiden Schenkel kreisförmige Öffnungen aufweisen, die von dem bogenförmigen Arm durchgriffen werden.

Die lösbare Verriegelung der beiden Teile kann auf verschiedene Arten mittels bekannter Verbindungstechniken, z.B. Bajonettverschluß erfolgen. So kann z.B. an einem der Teile nur ein Teil der Riegelverbindung darstellendes Riegelelement angeordnet sein, das mit einem am anderen Teil vorgesehenen Stift die Verbindung bewirkt. Voraussetzung für eine solche Verbindung wäre jedoch eine zusätzliche Führung der Teile zueinander. Eine einfache und schnelle Verbindung der Teile miteinander läßt sich beispielsweise dadurch erzielen, daß an der Grundplatte mehrere Riegelelemente befestigt sind, die mit an der Aufnahme lagemäßig entsprechend angeordneten Stiften die Riegelverbindung herstellen. Zu diesem Zweck können die Riegelelemente im wesentlichen U-förmig gestaltet sein, wobei ein Endbereich eines Schenkels zum anderen Schenkel weisend abgewinkelt ist und eine sich keilförmig verengende Öffnung besitzt. Wird die die Stifte aufweisende Aufnahme auf die Grundplatte aufgesetzt, so durchgreifen die Stifte zunächst den verbreiterten Bereich der Öffnung. Bei Verdrehen der Aufnahme wird aufgrund der keilförmigen Gestaltung der Öffnung die Aufnahme zentriert und gelangt in einen der Endbereiche der Öffnung, dessen lichte Weite in etwa dem Außendurchmesser des Stiftes entspricht, in die Verriegelungsstellung. In dieser Lage hintergreift der Stift den die Öffnung tragenden Schenkel, so daß ein Entfernen der Aufnahme in axialer Richtung nicht mehr möglich ist.

Die Erfindung soll im folgenden anhand von Ausführungsbeispielen näher erläutert werden.

Es zeigt

Fig. 1 die Fernsprechstation in einer aufgeklappten Vorderansicht,

Fig. 2 das Riegelelement in einer perspektivischen Ansicht,

Fig. 3 die die Verriegelung bildenden Teile in einer Ansicht zu Beginn des Verriegelungsvorganges,

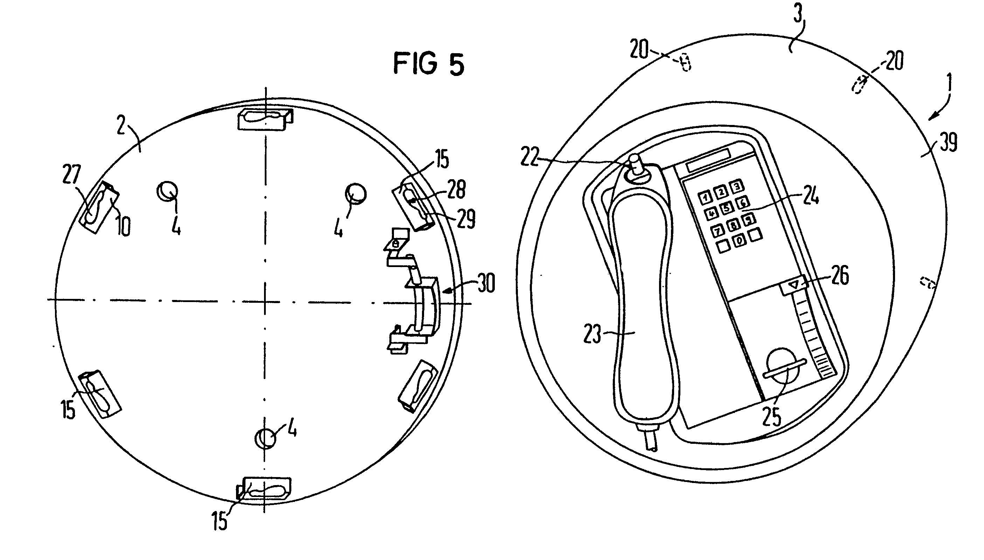

Fig. 4 die die Verriegelung bildenden Teile in der Verriegelungsstellung,

Fig. 5 die Fernsprechstation in einer Vorderansicht, wobei aus Gründen einer besseren Erkennbarkeit die Aufnahme von der Grundplatte gelöst ist,

Fig. 6 das die beiden Teile der Fernsprechstation verbindende Drehgelenk.

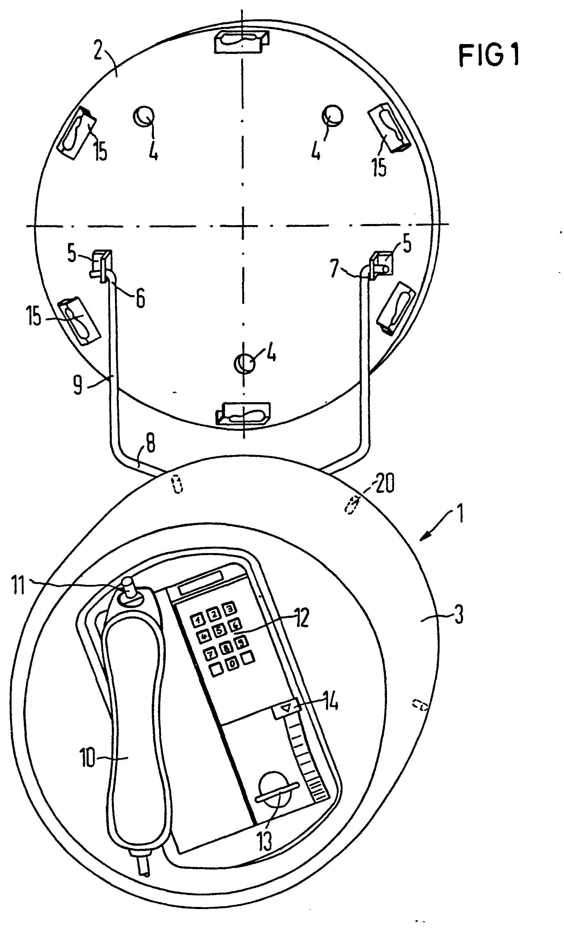

Die in Fig. 1 dargestellte Fernsprechstation 1 besteht aus einer ortsfest z.B. an einer Wand mittels einer Schraubverbindung befestigten Grundplatte 2 und einer schwenkbar an der Grundplatte befestigten Aufnahme 3. Zur Aufnahme der Befestigungselemente dienen an der Grundplatte 2 die Durchbrüche 4. Die Grundplatte 2 ist dabei als flache Scheibe gestaltet und trägt Winkel 5, die außermittig angeordnet sind und an ihrem freien Ende Bohrungen zur Aufnahme der abgewinkelten freien Schenkelenden 6 und 7 eines U-förmigen Bügels aufweisen. Dieser Bügel 9 ist mit seinem die Schenkel verbindenden bogenförmigen Bereich 8 an der Innenseite der topfförmig gestalteten Aufnahme 3 mittels eines hier nicht dargestellten Halteteils befestigt.

Die topfförmige Aufnahme 3 nimmt alle Bedienungsorgane einer Fernsprechstation auf. Bei dieser hier dargestellten Steckkartenfernsprechstation sind nur die wesentlichen Teile wie der an einem Betätigungselement 11 für den Gabelumschalter aufgehängte Handapparat 10, die Tastatur 12, der Einsteckschlitz 13 für die Steckkarte sowie eine Betätigungstaste 14 dargestellt, mit der die Steckkarte einer Kontroll- und Auswertungseinrichtung zugeführt wird.

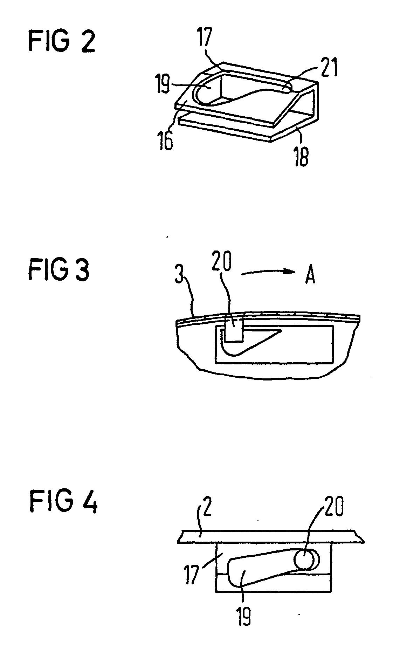

Die an der Grundplatte 2 angeordneten Riegelelemente 15, von denen eines in perspektivischer Ansicht in Fig. 2 gezeigt ist, sind im wesentlichen U-förmig gestaltet. Der Endbereich 16 des einen Schenkels 17 ist zum anderen Schenkel 18 hinweisend abgewinkelt und besitzt eine sich keilförmig verengende Öffnung 19. Diese Öffnung dient zur Aufnahme der an der topfförmigen Aufnahme an ihrer Innenfläche befestigten und zueinander weisenden Stifte 20 kreisförmigen Querschnitts.

Wie aus Fig. 3 erkennbar ist, durchgreift der an der Aufnahme befestigte Stift 20 zunächst den verbreiterten Bereich der Öffnung 19. Durch Verdrehen der topfförmigen Aufnahme 3 im Uhrzeigersinn (Pfeilrichtung A) wird der Stift 20 in den sich verengenden Bereich der Öffnung 19 geführt, so daß eine Zentrierung der Aufnahme 3 zur Grundplatte 2 erfolgt. Bei weiterem Verdrehen in Pfeilrichtung A gelangt der Stift 20 an dem Endbereich 21 der Öffnung 19 zur Anlage und hintergreift dabei den die Öffnung aufweisenden Schenkel 17, so daß ein Abziehen der topfförmigen Aufnahme 3 in axialer Richtung ausgeschlossen ist. Eine endgültige Sicherung der Fernsprechstation bzw. der Riegelverbindung erfolgt anschließend mittels eines hier nicht dargestellten und von außen zugänglichen Schlosses, das ein Öffnen der Station entgegen seiner Verriegelungsstellung verhindert.

Die Aufnahme 3 ist topfförmig gestaltet und nimmt alle Bedienungsorgane einer Fernsprechstation auf. Bei dieser hier dargestellten Steckkartenfernsprechstation sind ebenfalls nur die wesentlichen Teile wie der an einem Betätigungselement 22 für den Gabelumschalter aufgehängte Handapparat 23, die Tastatur 24, der Einsteckschlitz 25 für die Steckkarte sowie die Betätigungstaste 26 dargestellt, mit der die Steckkarte einer Kontroll- und Auswerteeinrichtung zugeführt wird.

An der Grundplatte 2 sind ebenfalls mehrere Riegelelemente 15 vorgesehen, die von an der Innenseite der topfförmigen Aufnahme 3 angeordneten und zueinander weisenden Stiften 20 zunächst in ihren erweiterten Bereich 27 der Öffnung 28 durchgriffen werden. Bei Verdrehen der Aufnahme im Uhrzeigersinn werden die Stifte 20 in einen sich verengenden Bereich 29 der Öffnung 28 geführt und hintergreifen dabei den die Öffnung 28 begrenzenden Schenkel des Riegelelementes 15, so daß eine Abnahme der topfförmigen Aufnahme in axialer Richtung ausgeschlossen ist. Eine endgültige Sicherung dieser Verriegelung erfolgt anschließend durch ein hier nicht dargestelltes und von außen zugängliches Schloß, das ein. Öffnen der Station entgegen seiner Verriegelungsstellung verhindert.

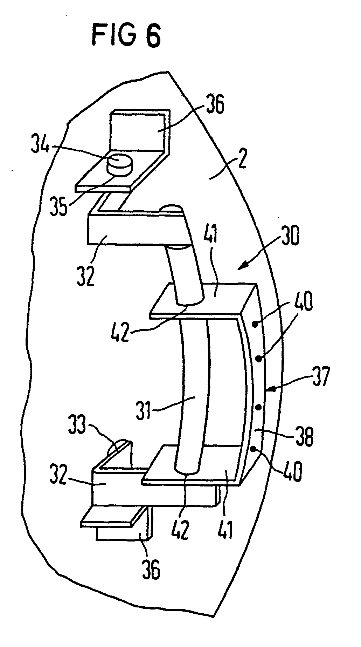

Die beiden Teile der Fernsprechstation 1 sind mittels des in Fig. 6 näher dargestellten Drehgelenkes 30 miteinander verbunden. Dieses Drehgelenk 30 wird gebildet aus einem bogenförmigen Arm 31 kreisförmigen Querschnitts, an dem die winkelförmigen Stege 32 befestigt sind. An ihrem freien Ende 33 besitzen die Stege Zapfen 34, die in Bohrungen 35 von an der Grundplatte 2 befestigten Winkeln 36 eingreifen. Am Arm 31 ist wiederum der U-förmige Halbebügel 37 schwenkbar und in axialer Richtung des Armes 31 verschiebbar gelagert. Dieser Haltebügel ist in seinem Basisbereich 38 bogenförmig gestaltet und der Form der Innenwandung der topfförmigen Aufnahme 3 angepaßt. Der Haltebügel kann z.B. im Bereich 39 mit der Innenwand der Aufnahme 3 durch Punktschweißen an den Stellen 40 verbunden werden. Im Endbereich seiner Schenkel 41 weist der Haltebügel 37 kreisförmige Öffnungen 42 auf, die von dem bogenförmigen Arm 31 durchgriffen werden. Ein derartig gestaltetes Drehgelenk gestattet einmal nach Lösen der Verriegelung das Abheben der die Bedienungsorgane enthaltenden Aufnahme 3 von der Grundplatte 2 und das anschließende Verschwenken der Aufnahme 3 in der Weise, daß sich diese mit ihrer Rückseite zum Betrachter weisend neben der Grundplatte befindet. In dieser Lage lassen sich schnell und einfach Wartungs- und Reparaturarbeiten durchführen.

**Patentansprüche**

1. Ortsfest angeordnete Fernsprechstation (1) mit einer an einer Grundplatte (2) über ein Gelenk (9, 30) lösbar befestigten Aufnahme (3) für die Bedienungseinrichtungen (10, 11, 12, 13, 14, 22, 23, 24, 25, 26), wobei die beiden Teile (2, 3) im Betriebszustand der Fernsprechstation (1) mittels einer Verriegelung (15, 20) verbunden und durch ein Schloß gesichert sind, dadurch gekennzeichnet, daß zumindest eines der beiden die Fernsprechstation (1) bildenden Teile (2, 3) topfförmig gestaltet ist und die Verbindung der beiden Teile (2, 3) über ein Orehgelenk (30) erfolgt, das einen bogenförmigen Arm (31) kreisförmigen Querschnitts besitzt, der an seinen freien Enden mit winkelförmigen Stegen (32) verbunden ist, deren freie Enden (33) wiederum Zapfen (34) aufweisen, die in Bohrungen (35) von an der Grundplatte (2) befestigten Winkeln (36) eingreifen, wobei an dem Arm (31) ein U-förmiger Haltebügel (37) schwenkbar und in axialer Richtung des Armes (31) verschiebbar gelagert ist, der mit der topfförmigen Aufnahme (3) fest verbunden ist.

2. Fernsprechstation nach Anspruch 1, dadurch gekennzeichnet, daß der Haltebügel (37) in seinem Basisbereich (38) bogenförmig gestaltet ist und im Endbereich seiner beiden Schenkel (41) kreisförmige Öffnungen (42) aufweist, die von dem bogenförmigen Arm (31) durchgriffen werden.

3. Fernsprechstation nach Anspruch 1, dadurch gekennzeichnet, daß die Verriegelung aus einem im wesentlichen U-förmig gestalteten Riegelelement (15) besteht, dessen einer (17) seiner beiden Schenkel (17, 18) im Endbereich (16) zum anderen Schenkel (18) abgewinkelt ist und eine sich keilförmig verengende Öffnung (19) aufweist, die von einem Stift (20) durchgriffen wird.

**Revendications**

1. Poste téléphonique fixe (1) comportant un logement (3), fixé de façon amovible sur une plaque de base (2) par l'intermédiaire d'une articulation (9, 30), pour les dispositifs de commande (10, 11, 12, 13, 14, 22, 23, 24, 25, 26), les deux parties (1, 2, 3) étant reliées au moyen d'un système de verrouillage (15, 20), lorsque le poste téléphonique (1) est dans son état de fonctionnement et étant bloquées au moyen d'un verrou, caractérisé par le fait qu'au moins l'une des deux parties (2, 3) constituant le poste téléphonique est agencé avec une forme de pot et la liaison des deux parties (2, 3) est réalisée au moyen d'une articulation pivotante (30), qui possède un bras en forme d'arc de cercle (31) possédant une section transversale circulaire et dont les extrémités libres sont reliées à des barrettes coudées (32), dont les extrémités libres (32) possèdent des tétons (34), qui s'engagent dans des perçages (35) de cornières (26) fixées à la plaque de base (2), un étrier de maintien (37) en forme de U pouvant pivoter sur le bras (31) et étant supporté de manière à être déplaçable dans la direction axiale du bras (31), qui est relié rigidement au logement en forme de pot (3).

2. Poste téléphonique suivant la revendication 1, caractérisé par le fait que l'étrier de maintien (37) possède une forme en arc de cercle dans sa zone de base (38) et possède, dans la zone d'extrémité de ses deux branches (41), des ouvertures de forme circulaire (42), que traverse le bras en forme d'arc de cercle (31).

3. Poste téléphonique suivant la revendication 1, caractérisé par le fait que le dispositif de verrouillage est constitué par un verrou (15) réalisé sensiblement en forme de U, dont l'une (17) des deux branches (17, 18) est repliée, dans la zone d'extrémité (16), en direction de l'autre branche (18) et possède une ouverture (19), qui se rétrécit en forme de coin et qui est traversée par une tige (20).

**Claims**

1. Fixed telephone station (1) having a mounting (3) for the control equipment (10, 11, 12, 13, 14, 22, 23, 24, 25, 26) removably attached on a base plate (2) via a joint (9, 30), the two parts (2, 3) being connected in the operating state of the telephone station (1) by means of a latching arrangement (15, 20) and secured by a lock, characterized in that at least one of the two parts (2, 3) forming the telephone station (1) is pot-shaped and the connection of the two parts (2, 3) is made by a swivel joint (30) which possesses an arched arm (31) of circular cross-section which is connected at its free ends to angled members (32), the free ends (33) of which in turn have journals (34) which engage in bores (35) of angle pieces (36) attached to the base plate (2), a U-shaped support bracket (37) being mounted on the arm (31) to be pivotable and slideable in the axial direction of the arm (31), which arm is rigidly connected to the pot-shaped mounting (3).

2. Telephone station according to Claim 1, characterized in that the support bracket (37) is arched in its base region (38), and in the end region of its two limbs (41) has circular openings (42), through which the arched arm (31) passes.

3. Telephone station according to Claim 1, characterized in that the latching arrangement consists of an essentially U-shaped latch element (15), one (17) of its two limbs (17, 18) being angled in the end region (16) relative to the other limb (18) and having a wedge-shaped tapering opening (19) through which a pin (20) passes.

FIG 1

FIG 2

FIG 3

FIG 4

FIG 5

EP 0 124 105 B1

## FIG 6